# EUROPÄISCHE PATENTSCHRIFT

(11) **EP 1 088 002 B1**
(45) Veröffentlichungstag und Bekanntmachung des Hinweises auf die Patenterteilung: **18.02.2004**
(21) Anmeldenummer: 99920642.8
(22) Anmeldetag: 12.04.1999
(51) Int. Cl.: C08F 4/64, C08F 4/70, C08F 10/00

(54) **KATALYSATORSYSTEM MIT ALUMINIUMFLUORIDAKTIVATOR**
CATALYST SYSTEM WITH AN ALUMINIUM FLUORIDE ACTIVATOR
SYSTEME CATALYSEUR CONTENANT DU FLUORURE D'ALUMINIUM COMME ACTIVATEUR

(30) Priorität: 24.04.1998 DE 19818219
(43) Veröffentlichungstag der Anmeldung: 04.04.2001
(73) Patentinhaber: Basell Polyolefine GmbH, 50389 Wesseling (DE)
(72) Erfinder: SÜLING, Carsten, D-67227 Frankenthal (DE); KRISTEN, Marc, Oliver, D-67117 Limburgerhof (DE); SCHWEIER, Günther, D-67159 Friedelsheim (DE); GONIOUKH, Andrei, D-67373 Dudenhofen (DE); HAUCK, Gerhard, D-67459 Böhl-Iggelheim (DE)
(74) Vertreter: Seelert, Stefan
(86) Internationale Anmeldenummer: PCT/EP1999/002449
(87) Internationale Veröffentlichungsnummer: WO 1999/055739

(56) Entgegenhaltungen:
- EP-A- 0 574 258
- EP-A- 0 589 472
- EP-A- 0 591 756
- WO-A-97/21742
- WO-A-98/11144

## Beschreibung

Die vorliegende Erfindung betrifft ein Katalysatorsystem, welches für die Polymerisation von ungesättigten Monomeren geeignet ist, enthaltend als aktive Bestandteile solche, die erhältlich sind durch die Umsetzung von
A) einer Übergangsmetallverbindung,
   mit
B) Aluminiumtrifluorid,
C) einer kationenbildenden Verbindung
   und gegebenenfalls
D) weiteren Komponenten.

Weiterhin betrifft die vorliegende Erfindung die Verwendung von Aluminiumtrifluorid als Aktivator in einem Katalysatorsystem, ein Verfahren zur Herstellung eines Katalysatorsystems, ein Verfahren zur Herstellung von Polymeren, welchen Monomeren mit C-C-Doppelbindung und/oder C-C-Dreifachbindung zugrunde liegen und die Verwendung eines Katalysatorsystems zur Knüpfung von Kohlenstoff-Kohlenstoff-Kovalenzbindungen oder Kohlenstoff-Heteroatom-Kovalenzbindungen.

Es ist bekannt, daß man zur Herstellung polymerisationsaktiver Metallverbindungen, wie Metalloceniumionen-Katalysatoren beispielsweise folgende Umsetzungen vornehmen kann:
a) Metallocendialkyl + starke kationenbildende Verbindung (Lewis-Säure), X. Yang, C.L. Stern. T.F. Marks, J. Am. Chem. Soc. 1991, 113, 3623-5
b) Metallocendialkyl + Brönsted-Säure mit nicht-nucleophilem Anion EP 0 591 756 (Idemitsu Kosan)
c) Metallocenverbindung + Aluminoxan EP 0 035 242 (BASF AG)

Den Umsetzungen a) und b) ist gemein, daß sie in der Wahl des Aktivators, nämlich der starken kationenbildenden Verbindung und der Brönsted-Säure mit nicht-nucleophilem Anion, sehr eingeschränkt sind. Nur sehr spezielle, vorzugsweise perfluoraromatische Borverbindungen, führen zu einem brauchbaren Aktivator. Die Umsetzung c) benötigt große Mengen an teurem Aluminoxan, welches im gebildeten Polymeren störend wirkt.

Es bestand daher der Wunsch aktive Katalysatoren auf Basis billiger, gut zugänglicher und breit anwendbarer Aktivatoren herzustellen.

EP-A 574 258 beschreibt Metallocenkatalysatorsysteme für die Polymerisation von α-Olefinen, die erhältlich sind durch die Umsetzung von einer Übergangsmetallverbindung, einem Aluminoxan, einer Organoaluminiumverbindung und einer Lewis-Säure.

R. Taube, DD 265 150 A1 beschreibt die Polymerisation von 1,3-Butadien in Gegenwart einer Mischung aus Nickelcyclododecatrien oder Nickelacetylacetonat mit Aluminiumtriethyl und Aluminiumtrifluorid. Die Polymerisation anderer Monomerer, insbesondere Alkene oder Styrol und dessen Derivate sowie andere Katalysatoren die Aluminiumtrifluorid und zusätzlich eine kationenbildende Verbindung enthalten werden nicht erwähnt.

Aufgabe der vorliegenden Erfindung war es ein Katalysatorsystem zur Verfügung zu stellen, welches in der Wahl des Aktivators nicht sehr eingeschränkt ist. Dies bedeutet, daß auch übliche kationenbildende Verbindungen, die üblicherweise in der präparativen organischen Chemie eingesetzt werden, wie Hexafluoroantimonsäure HSbF6, Antimonpentafluorid, SbF5, Trifluormethansulfonsäure CF₃SO₃H, zur Generierung von Übergangsmetall-Katalysatoren verwendet werden könnten. Weiterhin sollte das Katalysatorsystem für sich als Trägerkatalysator fungieren können oder in einen solchen umgewandelt werden können.

Demgemäß wurde ein Katalysatorsystem, enthaltend als aktive Bestandteile solche, die erhältlich sind durch die Umsetzung von
A) einer Übergangsmetallverbindung
   mit
B) Aluminiumtrifluorid und
C) einer kationenbildenden Verbindung, die von B) verschiedenen ist,
   ausgewählt aus der Gruppe bestehend aus
   moderaten neutralen und positiv geladenen Lewis-Säuren der allgemeinen Formel

   MetR'_{n'}

   wobei
   - Met: ein Element der Gruppen 13 bis 15 des Periodensystems der Elemente,
   - R': anorganische oder organische Reste, die gleich oder verschieden sein können, und
   - n: eine ganze Zahl von 3 bis 5 ist, wobei n für die Wertigkeit von Met steht, oder

   [MetR'ₙ₊₁]^{⊕} [An]^{⊖} oder [MetR'ₙ₋₁]^{⊕} [An]^{⊖},
   wobei
   - Met: ein Element der Gruppen 13 bis 16 des Periodensystems der Elemente,
   - R': anorganische oder organische Reste, die gleich oder verschieden sein können,
   - n: eine ganze Zahl von 2 bis 5, wobei n für die Wertigkeit von Met steht, und
   - [An]^{⊖}: ein Anion ist,
   Brönsted-Säuren mit wenig nucleophilem Anion der allgemeinen Formel

   [MetR'ₙ₊₁]^{⊖},

   wobei
   - Met: für ein Element der Gruppen 13 bis 15 des Periodensystems der Elemente,
   - R': für anorganische oder organische Reste, die gleich oder verschieden sein können, und
   - n: eine ganze Zahl von 3 bis 5 steht, wobei n für die Wertigkeit von Met steht,
   wenig nucleophilen Anionen der allgemeinen Formel

   R'SO₃^{⊖},

   wobei
   - R': für einen anorganischen oder organischen Rest steht,
   starken neutralen Lewissäuren der allgemeinen Formel II

   M³X¹X²X³ II

   in der
   - M³: ein Element der III. Hauptgruppe des Periodensystems bedeutet, und
   - X¹, X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen,
   und
   ionischen Verbindungen mit starken lewissauren Kationen der allgemeinen Formel III

   [(Y^{a+})Q₁Q₂...Q_{z}]^{d+} III

   in denen
   - Y: ein Element der I. bis VI. Hauptgruppe oder der I. bis VIII. Nebengruppe des Periodensystems bedeutet,
   - Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
   - a: für ganze Zahlen von 1 bis 6 und
   - z: für ganze Zahlen von 0 bis 5 steht,
   - d: der Differenz a-z entspricht, wobei d jedoch größer oder gleich 1 ist,
   und gegebenenfalls
D) weiteren Komponenten,
die Verwendung von Aluminiumtrifluorid in in dem Katalysatorsystem, ein Verfahren zur Herstellung des Katalysatorsystems, ein Verfahren zur Herstellung von Polymeren unter Verwendung des Katalysatorsystems sowie die Verwendung des Katalysatorsystems zur Knüpfung von Kohlenstoff-Kohlenstoff-Kovalenzbindungen oder Kohlenstoff-Heteroatom-Kovalenzbindungen gefunden.

Als Übergangsmetallverbindungen A) kommen prinzipiell alle in Frage, die mit den Komponenten B), C) und gegebenenfalls D) chemisch reagieren, wobei ein aktiver Katalysator entsteht.

Gut geeignete Übergangsmetallverbindungen A) sind zum Beispiel

Übergangsmetallkomplexe mit einem Liganden der allgemeinen Formeln F-I bis F-IV 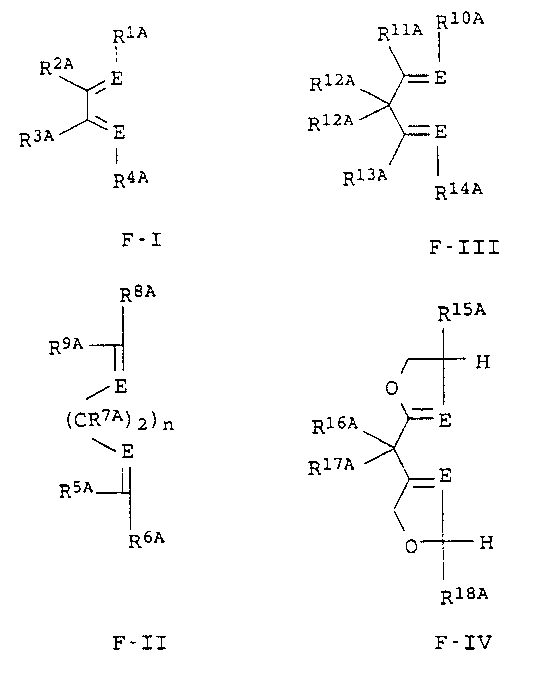 wobei das Übergangsmetall ausgewählt ist aus den Elementen Ti, Zr, Hf, Sc, V, Nb, Ta, Cr, Mo, W, Fe, CO, Ni, Pd, Pt oder ein Element der Seltenerd-Metalle. Bevorzugt sind hierbei Verbindungen mit Nickel und Palladium als Zentralmetall.

E ist ein Element der Gruppe 15 des Periodensystems der Elemente (5. Hauptgruppe), bevorzugt N oder P, wobei N besonders bevorzugt ist. Die beiden Atome E in einem Molekül können dabei gleich oder verschieden sein.

Die Reste R^{1A} bis R^{18A}, die gleich oder verschieden sein können, stehen dabei für folgende Gruppen:
- R^{1A} und R^{4A}:: unabhängig voneinander für Kohlenwasserstoffoder substituierte Kohlenwasserstoffreste, bevorzugt sind dabei Kohlenwasserstoffreste bei denen das dem Element E benachbarte Kohlenstoffatom mindestens mit zwei Kohlenstoffatomen verbunden ist.
- R^{2A} und R^{3A}:: unabhängig voneinander für Wasserstoff, Kohlenwasserstoff- oder substituierte Kohlenwasserstoffreste, R^{2A} und R^{3A} können auch zusammen ein Ringsystem bilden in dem auch ein oder mehrere Heteroatome vorhanden sein können.
- R^{6A}:: für Kohlenwasserstoff- oder substitu ierte Kohlenwasserstoffreste,
- R^{5A}:: für Wasserstoff, Kohlenwasserstoff- oder substituierte Kohlenwasserstoffreste,
- R^{6A} und R^{5A}: können auch zusammen ein Ringsystem bilden.
- R^{8A}:: für Kohlenwasserstoff- oder substituierte Kohlenwasserstoffreste,
- R^{9A}:: für Wasserstoff, Kohlenwasserstoff- oder substituierte Kohlenwasserstoffreste,
- R^{8A} und R^{9A}: können auch zusammen ein Ringsystem bilden.
- R^{7A}:: unabhängig voneinander für Wasserstoff, Kohlenwasserstoff- oder substituierte Kohlenwasserstoffreste, zwei R^{7A} können auch zusammen ein Ringsystem bilden. n ist eine ganze Zahl zwischen 1 und 4 bevorzugt 2 oder 3.
- R^{10A} und R^{14A}:: unabhängig voneinander für Wasserstoff, Kohlenwasserstoff- oder substituierte Kohlenwasserstoffreste
- R^{11A},R^{12A} und R^{13A}:: unabhängig voneinander für Wasserstoff, Kohlenwasserstoff oder substituierte Kohlenwasserstoffreste, hierbei können auch zwei oder mehr Reste R^{11A}, R^{12A} und R^{13A} zusammen ein Ringsystem bilden.
- R^{15A} und R^{18A}:: unabhängig voneinander für Wasserstoff, Kohlenwasserstoff- oder substituierte Kohlenwasserstoffreste
- R^{16A} und R^{17A}:: unabhängig voneinander für Wasserstoff, Kohlenwasserstoff- oder substituierte Kohlenwasserstoffreste

Besonders geeignete Verbindungen F-I bis F-IV sind z.B.:
Di (2,6-di-i-propyl-phenyl)-2,3-dimethyl-diazabutadien-palladiumdichlorid
Di (di-i-propyl-phenyl)-2,3-dimethyl-diazabutadien-nickel-dichlorid
Di(2,6-di-i-propyl-phenyl)-dimethyl-diazabutadien-palladium-dimethyl
Di(2,6-di-i-propyl-phenyl)-2,3-dimethyl-diazabutadien-nickel-dimethyl
Di(2,6-dimethyl-phenyl)-2,3-dimethyl-diazabutadien-palladiumdichlorid
Di(2,6-dimethyl-phenyl)-2,3-dimethyl-diazabutadien-nickel-dichlorid
Di(2,6-dimethyl-phenyl)-2,3-dimethyl-diazabutadien-palladium-dimethyl
Di(2,6-dimethyl-phenyl)-2,3-dimethyl-diazabutadien-nickel-dimethyl
Di(2-methyl-phenyl)-2,3-dimethyl-diazabutadien-palladium-dichlorid
Di(2-methyl-phenyl)-2,3-dimethyl-diazabutadien-nickel-dichlorid
Di(2-methyl-phenyl)-2,3-dimethyl-diazabutadien-palladium-dimethyl
Di(2-methyl-phenyl)-2,3-dimethyl-diazabutadien-nickel-dimethyl
Diphenyl-2,3-dimethyl-diazabutadien-palladium-dichlorid
Diphenyl-2,3-dimethyl-diazabutadien-nickel-dichlorid
Diphenyl-2,3-dimethyl-diazabutadien-palladium-dimethyl
Diphenyl-2,3-dimethyl-diazabutadien-nickel-dimethyl
Di(2,6-dimethyl-phenyl)-azanaphten-palladium-dichlorid
Di(2,6-dimethyl-phenyl)-azanaphten-nickel-dichlorid
Di(2,6-dimethyl-phenyl)-azanaphten-palladium-dimethyl
Di(2,6-dimethyl-phenyl)-azanaphten-nickel-dimethyl
1,1'-DipyridyI-palladium-dichlorid
1,1'-Dipyridyl-nickel-dichlorid
1,1'-Dipyridyl-palladium-dimethyl
1,1'-Dipyridyl-nickel-dimethyl

Besonders gut geeignete Übergangsmetallverbindungen A) sind weiterhin solche mit mindestens einem Cyclopentadienyltyp-Liganden, die gemeinhin als Metallocenkomplexe (zwei und mehr Cyclopentadienyltyp-Liganden) oder Halbsandwich-Komplexe (ein Cyclopentadienyltyp-Ligand) bezeichnet werden.

Als Komponente A) enthält das erfindungsgemäße Katalysatorsystem mindestens einen oder mehrere Metallocenkomplexe. Als Metallocenkomplexe eignen sich besonders solche der allgemeinen Formel 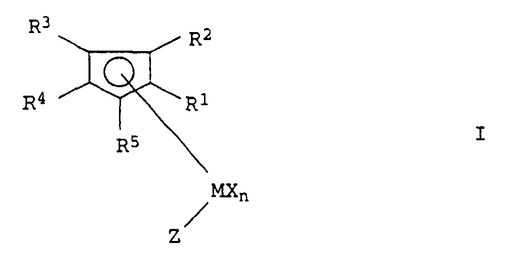 in der die Substituenten folgende Bedeutung haben:
- M: Titan, Zirkonium, Hafnium, Vanadium, Niob oder Tantal, sowie Elemente der III. Nebengruppe des Periodensystems und der Lanthanoiden,
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷,
- n: eine ganze Zahl zwischen 1 und 3, wobei n der Wertigkeit von M minus der Zahl 2 entspricht,
wobei
- R⁶ und R⁷: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R¹ bis R⁵: Wasserstoff, C₁- bis C₁₀-Alkyl,
5- bis 7gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁸)₃ mit
- R⁸: C₁- bis C₁₀-Alkyl, C₃- bis C₁₀-Cycloalkyl oder C₆- bis C₁₅-Aryl,
- Z: für X oder 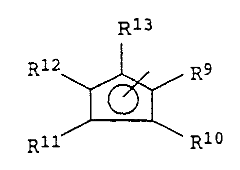 steht,
wobei die Reste
- R⁹ bis R¹³: Wasserstoff, C₁- bis C₁₀-Alkyl,
5- bis 7gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁴)₃ mit
- R¹⁴: C₁- bis C₁₀-Alkyl, C₆- bis C₁₅-Aryl oder
C₃- bis C₁₀-Cycloalkyl,
oder wobei die Reste R⁴ und Z gemeinsam eine Gruppierung -R¹⁵-Abilden, in der
- R¹⁵: 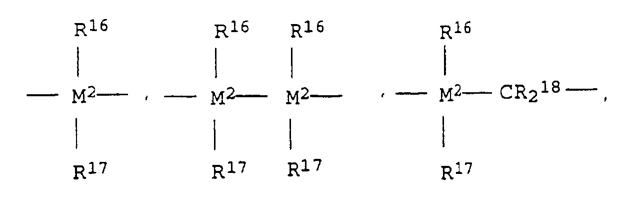 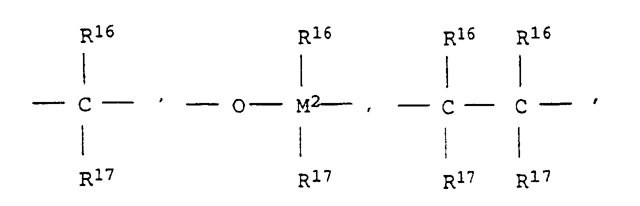
= BR¹⁶, = AlR¹⁶, -Ge-, -Sn-, -O-, -S-, = SO, = SO₂, = NR¹⁶, = CO, = PR¹⁶ oder = P(O)R¹⁶ ist,
wobei
- R¹⁶, R¹⁷ und R¹⁸: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M²: Silicium, Germanium oder Zinn ist,
- A: -O-, -S-, 〉NR¹⁹ oder 〉PR¹⁹ bedeuten, mit
- R¹⁹: C₁- bis C₁₀-Alkyl, C₆- bis C₁₅-Aryl, C₃- bis C₁₀-Cycloalkyl, Alkylaryl oder Si(R²⁰)₃,
- R²⁰: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁴ und R¹² gemeinsam eine Gruppierung -R¹⁵-bilden.

Von den Metallocenkomplexen der allgemeinen Formel I sind 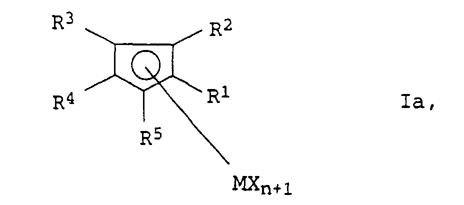 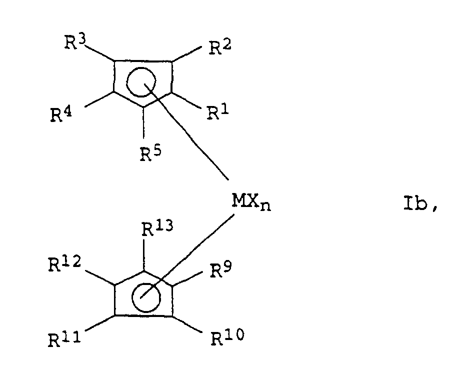 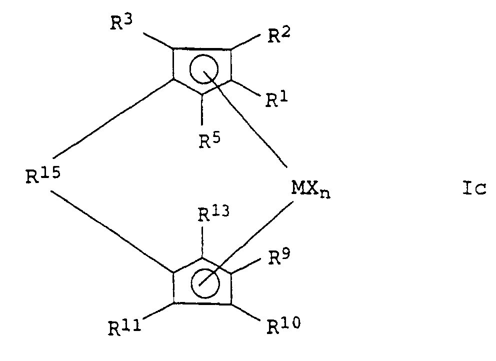 und 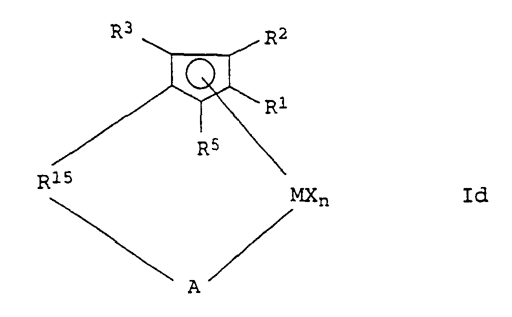 bevorzugt.

Die Reste X können gleich oder verschieden sein, bevorzugt sind sie gleich.

Von den Verbindungen der Formel Ia sind insbesondere diejenigen bevorzugt, in denen
- M: Titan, Zirkonium oder Hafnium,
- X: Chlor, C₁-bis C₄-Alkyl oder Phenyl,
- n: die Zahl 2 und
- R¹ bis R⁵: Wasserstoff oder C₁- bis C₄-Alkyl bedeuten.
Von den Verbindungen der Formel Ib sind als bevorzugt diejenigen zu nennen, bei denen
- M: für Titan, Zirkonium oder Hafnium steht,
- X: Chlor, C₁-bis C₄-Alkyl oder Phenyl,
- n: die Zahl 2,
- R¹ bis R⁵: Wasserstoff, C₁- bis C₄-Alkyl oder Si(R⁸)₃,
- R⁹ bis R¹³: Wasserstoff, C₁- bis C₄-Alkyl oder Si(R¹⁴)₃ bedeuten.

Insbesondere sind die Verbindungen der Formel Ib geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid
sowie die entsprechenden Dimethylzirkoniumverbindungen.

Von den Verbindungen der Formel Ic sind diejenigen besonders geeignet, in denen
- R¹ und R⁹: gleich sind und für Wasserstoff oder C₁- bis C₁₀-Alkylgruppen stehen,
- R⁵ und R¹³: gleich sind und für Wasserstoff, eine Methyl-, Ethyl-, iso-Propyl- oder tert.-Butylgruppe stehen,
- R², R³, R¹⁰ und R¹¹ die Bedeutung: R³ und R¹¹ C₁- bis C₄-Alkyl
R² und R¹⁰ Wasserstoff
haben oder zwei benachbarte Reste R² und R³ sowie R¹⁰ und R¹¹ gemeinsam für 4 bis 12 C-Atome aufweisende cyclische Gruppen stehen,
- R¹⁵: für 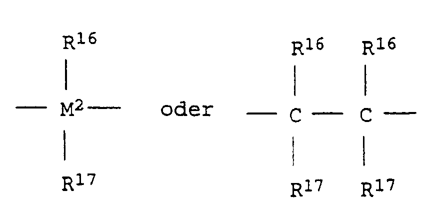 steht,
- M: für Titan, Zirkonium oder Hafnium und
- M²: für Silicium
- X: für Chlor, C₁- bis C₄-Alkyl oder Phenyl stehen.

Beispiele für besonders geeignete Komplexverbindungen Ic sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-ethylindenyl)-zirkoniumdichlorid,
Dimethylsilandiylbis(-2-methylbenzindenyl)-zirkoniumdichlorid
Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Diphenylsilandiylbis(-2-methylindenyl)-hafniumdichlorid
sowie die entsprechenden Dimethylzirkoniumverbindungen.

Weitere Beispiele für geeignete Komplexverbindungen Ic sind u.a. Dimethylsilandiylbis(-2-methyl-4-phenylindenyl)zirkoniumdichlorid,
Dimethylsilandiylbis(-2-methyl-4-[1-naphthylindenyl])zirkoniumdichlorid,
Dimethylsilandiylbis (-2-methyl-4-isopropylindenyl)zirkoniumdichlorid,
Dimethylsilandiylbis(-2-methyl-4,6-diisopropylindenyl)zirkoniumdichlorid, Dimethylsilandiylbis-(2-ethyl-4-phenylindenyl)zirkoniumdichlorid, Dimethylsilandiylbis-(2-methyl-4-(para-4-butyl)-phenylindenyl)zirkondichlorid, sowie die entsprechenden Dimethylzirkoniumverbindungen.

Bei den Verbindungen der allgemeinen Formel Id sind als besonders geeignet diejenigen zu nennen, in denen
- M: für Titan oder Zirkonium,
- X: für Chlor, C₁-bis C₄-Alkyl oder Phenyl stehen.
- R¹⁵: für 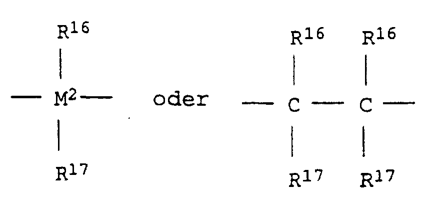 steht,
- A: für -O-, -S-, 〉NR¹⁹
und
- R¹ bis R³ und R⁵: für Wasserstoff, C₁- bis C₁₀-Alkyl, C₃- bis C₁₀-Cycloalkyl, C₆- bis C₁₅-Aryl oder Si(R⁸)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Die Komponente B) ist Aluminiumtrifluorid. Dieses ist bekannt und beispielsweise in Holleman-Wiberg, Lehrbuch d. Anorgan. Chemie, 101. Aufl. 1995, S. 1073 ff, Walter de Gruyter (Berlin, New York) beschrieben. Es kann entweder kristallin oder vorzugsweise amorph vorliegen. Ein gut geeignetes Verfahren zur Herstellung des amorphen Aluminiumtrifluorids ist die Umsetzung von Aluminiumtriorganylen mit beispielsweise Bortrifluorid-Etherat, wie in R. Taube, Macromol. Chem. 194, 1273-1288 (1993) beschrieben. Das Aluminiumtrifluorid B) kann entweder präparativ isoliert oder in situ hergestellt, eingesetzt werden.

Das molare Verhältnis Aluminiumtrifluorid B) Metallkomplex A) liegt im Bereich von 10 000:1 bis 1:1, bevorzugt von 100:1 bis 1:1 und besonders bevorzugt von 50:1 bis 1:1.

Die kationenbildende Verbindung C) kann eine Lewis-Säure (elektrisch neutral oder positiv geladen) oder eine Brönsted-Säure sein. Als neutrale Lewis-Säuren kommen vorzugsweise solche in Betracht, die nach der Umsetzung mit der Übergangsmetallkomponenete A) ein nicht-nucleophiles Anion bilden. Als positiv geladene Lewis-Säuren und als Brönsted-Säuren kommen vorzugsweise solche in Betracht, die ein wenig nucleophiles bis praktisch nicht-nucleophiles konjugiertes Anion haben.

Weiterhin können sowohl moderate als auch starke Lewis-Säuren sowie wenig nucleophile als auch praktisch nicht-nucleophile Anionen zur Katalysatorgenerierung verwendet werden.

Als kationenbildende Verbindung C) kommen in Frage a) aus der Klasse der moderaten neutralen und positiv geladenen Lewis-Säuren Verbindungen der Elemente der Gruppen 13 bis 15 des Periodensystems der Elemente der allgemeinen Formel MetR'ₙ, wobei Met ein Element aus den Gruppen 13 bis 15 des des Periodensystems der Elemente, R' anorganische oder organische Reste, die gleich oder verschieden sein können und n eine ganze Zahl von 3 bis 5 ist, wobei n für die Wertigkeit von Met steht.

Bevorzugt sind hierbei Verbindungen mit der Gruppen 13 und 15, die nur Halogenatome als Substituenten tragen. Besonders bevorzugt sind Bortrifluorid und Antimonpentafluorid.

Positiv geladene Lewis-Säuren können z. B. aus Verbindungen der allgemeinen Formeln [MetR'ₙ₊₁]^{⊕}[An]^{⊖} oder [MetR'ₙ₋₁]^{⊕}[An]^{⊖} ausgewählt werden, wobei Met für ein Element der Gruppen 13 bis 16 des Periodensystems der Elemente, R' für anorganische oder organische Reste, die gleich oder verschieden sein können und n für eine ganze Zahl von 2 bis 5 steht, wobei n für die Wertigkeit von Met steht. Die Art des korrespondierenden Anions [An]^{⊖} ist an sich unkritisch, bewährt haben sich z.B. Anion wie Bortetrafluorid und Antimonhexafluorid. Bevorzugt sind positiv geladene Lewis-Säuren, die ausschließlich organische Substituenten tragen. Besonders bevorzugt sind Verbindungen wie z.B. C(C₆H₅)₃^{⊕}BF₄^{⊖} oder O(CH₃)₃^{⊕}, BF₄^{⊖}.

Aus der Klasse der Brönsted-Säuren mit wenig nucleophilem Anion (b) kommen Verbindungen in Frage bei denen das Anion der allgemeinen Formel MetR'ₙ₊₁^{⊖} entspricht, wobei Met für ein Element der Gruppen 13 bis 15 des Periodensystems der Elemente R' für anorganische oder organische Reste, die gleich oder verschieden sein können, und n für eine ganze Zahl von 3 bis 5 steht, wobei n für die wertigkeit von Met steht. Bevorzugt sind Anionen, die ausschließlich Halogensubstituenten am Zentralelement tragen. Besonders bevorzugt sind Verbindungen, wie HBF₄ und HSbF₆. Diese Verbindungen können auch als Etherate vorliegen.

Eine weitere Klasse von verwendbaren, wenig nucleophilen Anionen leitet sich von der allgemeinen Formel R'SO₃^{⊖} ab. Hierbei steht R' für einen anorganischen oder organischen Rest, bevorzugt für einen organischen C₁-C₁₀-Alkyl- oder C₆-C₂₀-Aryl-Rest, bei dem bevorzugt zumindest ein Teil der Wasserstoffatome durch Halogenatome, bevorzugt durch Fluoratome substituiert sein können. Besonders bevorzugte Verbindungen dieser Klasse sind zum Beispiel Säuren R'SO₃-H, wie Fluorsulfonsäure, Phenylsulfonsäure, Trifluormethylsulfonsäure und Pentafluorphenylsulfonsäure.

Starke, neutrale Lewissäuren als Komponente C) sind Verbindungen der allgemeinen Formel II

M³X¹X²X³ II

in der
- M³: ein Element der III. Hauptgruppe des Periodensystems bedeutet, insbesondere B, Al oder Ga, vorzugsweise B,
- X¹, X² und X³: für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel II, in der X¹, X² und X³ gleich sind, vorzugsweise Tris(pentafluorphenyl)boran.

Ionische Verbindungen als Komponente C) mit starken lewissauren Kationen sind Verbindungen der allgemeinen Formel III

[(Y^{a+})Q₁Q₂...Q_{z}]^{d+} III

in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 und
- z: für ganze Zahlen von 0 bis 5 steht,
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen als Komponente C) mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildende Verbindung beträgt bevorzugt 0,1 bis 10 Äquivalente, bezogen auf die Übergangsmetallkomponente A).

Das erfindungsgemäße Katalysatorsystem kann als Komponente D) gegebenenfalls noch eine Organometallverbindung, vorzugsweise eine Metallverbindung der allgemeinen Formel IV

M¹ (R²¹)ᵣ (R²²)ₛ (R²³)ₜ IV

in der
- M¹: ein Alkali-, ein Erdalkalimetall oder ein Metall der III. Hauptgruppe des Periodensystems, d.h. Bor, Aluminium, Gallium, Indium oder Thallium bedeutet,
- R²¹: Wasserstoff, C₁- bis C₁₀-Alkyl, C₆- bis C₁₅-Aryl, Alkylaryl oder Arylalkyl mit jeweils 1 bis 10 C-Atom im Alkylrest und 6 bis 20 C-Atomen im Arylrest,
- R²² und R²³: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
und
- s und t: ganze Zahlen von 0 bis 2 bedeuten, wobei die Summe r+s+t der Wertigkeit von M¹ entspricht,
enthalten. Liegt die Komponente D) zusammen mit A) und/oder C) vor, so ist sie für diesen Fall nicht identisch mit den Komponenten A) und insbesondere C).

Von den Metallverbindungen der allgemeinen Formel IV sind diejenigen bevorzugt, in denen
- M¹: Lithium, Magnesium oder Aluminium bedeutet und
- R²¹ bis R²³: für C₁- bis C₁₀-Alkyl stehen.

Besonders bevorzugte Metallverbindungen der Formel IV sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn die Komponente D) eingesetzt wird, ist sie bevorzugt in einer Menge von 800:1 bis 1:1, insbesondere 500:1 bis 50:1 (molares Verhältnis von M¹ aus IV zu Übergangsmetall M aus I) im Katalysatorsystem enthalten.

Das Katalysatorsystem kann zusätzlich zu A), B), C) und gegebenenfalls D) eine Trägersubstanz enthalten.

Geeignete Trägersubstanzen sind beispielsweise organische Polymere, vorzugsweise jedoch poröse anorganische Materialien.

Als Trägermaterialien werden vorzugsweise feinteilige Träger eingesetzt, die einen Teilchendurchmesser im Bereich von 0,1 bis 1000 µm aufweisen, bevorzugt von 10 bis 300 µm, insbesondere von 30 bis 70 µm. Geeignete organische Träger sind beispielsweise feinteilige Polymerisate, z.B. feinteiliges Polyethylen oder feinteiliges Polypropylen. Als anorganische Träger sind z.B. Aluminiumtrioxid, Siliziumdioxid, Titandioxid oder deren Mischoxide, Aluminiumphosphat oder Magnesiumchlorid geeignet. Bevorzugt kommen Kieselgele der Formel SiO₂ · a Al₂O₃ zum Einsatz, worin a für eine Zahl im Bereich von 0 bis 2, vorzugsweise 0 bis 0,5, steht. Die Trägerpartikel können in granulärer Form sowie sprühgetrocknet in mikroskopischer Form verwendet werden. Derartige Produkte sind im Handel erhältlich, z.B. Silica Gel 332 der Fa. Grace oder ES 70 X der Fa. Crosfield.

Bevorzugte anorganische Trägermaterialien sind saure, anorganische Metall- oder Halbmetall-Oxide mit sehr hoher Porosität, die zum Beispiel in der älteren Deutschen Patentanmeldung 197 20 980.7, insbesondere auf Seite 3, Zeilen 45 bis Seite 5, Zeile 11 beschrieben werden.

Die Trägermaterialien können thermisch oder chemisch (z.B. mit Metallalkylverbindungen) vorbehandelt sein, um ein bestimmtes Eigenschaftsprofil des Trägers (z.B. Wasser- und/oder OH-Gruppengehalt) zu erzielen.

Man erhält das erfindungsgemäße Katalysatorsystem in der Regel durch Umsetzung von Aluminiumfluorid mit einer Übergangsmetallverbindung A), die zuvor mit einem Kationenbildner C) in Kontakt gebracht wurde. Diese Reaktion kann in homogener, flüssiger Phase oder auch in Anwesenheit eines Trägermaterials durchgeführt werden, wobei in der Regel organische Lösungsmittel als Suspensionsmittel verwendet werden. Die so erhaltene Verbindung kann direkt in Suspension als Katalysator eingesetzt werden. Es ist aber ebenso möglich, die Verbindung zu isolieren und sie als solche als Katalysator z. B. in Gasphasenprozessen einzusetzen, auch kann sie nach der Isolierung wieder in Suspension gebracht und dann als Katalysator eingesetzt werden.

Das Aluminiumfluorid B) kann auch in situ (z.B. durch Reaktion von einer Aluminiumalkylverbindung mit Bortrifluorid) hergestellt und dann, gegebenenfalls in Gegenwart eines Trägermaterials, mit dem Reaktionsprodukt von Übergangsmetallverbindung A) und Kationenbildner C) in Kontakt gebracht werden. Die Reaktion der Übergangsmetallverbindung A) mit dem Kationenbildner C) kann auch in Gegenwart von Aluminiumfluorid B) und gegebenenfalls eines Trägermaterials durchgeführt werden.

Das erfindungsgemäße Katalysatorsystem wird zur Polymerisation von Monomeren mit C-C-Doppelbindung oder C-C-Dreifachbindung eingesetzt. Dabei kann die C-C-Doppelbindung oder die C-C-Dreifachbindung oder beide sowohl terminal als auch innenständig, sowohl exocyclisch als auch endocyclisch angeordnet sein. Bevorzugte Monomere mit C-C-Dreifachbindung sind C2- bis C10-Alk-1-ine, wie Ethin, Propin, 1-Butin, 1-Hexin und weiterhin Phenylacetylen. Bevorzugt wird das erfindungsgemäße Polymerisationsverfahren zur Polymerisation oder Copolymerisation von C₂- bis C₁₂-Alk-1-enen eingesetzt. Als C₂- bis C₁₂-Alk-1-ene sind Ethylen, Propylen, But-1-en, Pent-1-en, 4-Methyl-pent-1-en, Hex-1-en, Hept-1-en oder Oct-1-en sowie vinylaromatische Monomere wie Styrol, p-Methylstyrol oder 2,4-Dimethylstyrol oder Gemische aus diesen C₂- bis C₁₂-Alk-1-enen bevorzugt. Besonders bevorzugt sind Homooder Copolymerisate des Ethylens oder des Propylens, wobei der Anteil an Ethylen oder an Propylen in den Copolymerisaten mindestens 50 Mol-% beträgt. Bei den Copolymerisaten des Ethylens sind diejenigen bevorzugt, die als weitere Monomere Propylen, But-1-en, Hex-1-en oder Oct-1-en oder deren Mischungen enthalten. Bei den Copolymerisaten des Propylens handelt es sich insbesondere um solche Copolymerisate, die als weitere Monomere Ethylen oder But-1-en oder deren Mischungen enthalten.

Vorzugsweise werden mit dem erfindungsgemäßen Polymerisationsverfahren solche Polymerisate hergestellt, die
50 bis 100 Mol-% Ethylen und
0 bis 50 Mol-%, insbesondere 0 bis 30 Mol-% C₃- bis C₁₂-Alk-1-ene
enthalten.

Bevorzugt sind auch solche Polymerisate, die
50 bis 100 Mol-% Propylen,
0 bis 50 Mol-%, insbesondere 0 bis 30 Mol-% Ethylen und
0 bis 20 Mol-%, insbesondere 0 bis 10 Mol-% C₄- bis C₁₂-Alk-1-ene
aufweisen.

Die Summe der Mol-% ergibt stets 100.

Die Polymerisation kann in den für die Polymerisation von Olefinen üblichen Verfahren, wie Lösungsverfahren, Suspensionsverfahren, gerührtes Gasphasenverfahren oder Gasphasenwirbelschichtverfahren, kontinuierlich oder auch diskontinuierlich durchgeführt werden. Als Lösungsmittel oder Suspensionsmittel können inerte Kohlenwasserstoffe, wie beispielsweise iso-Butan, oder aber die Monomeren selbst verwendet werden. Besonders gut geeignete Verfahren zur Herstellung der Polymerisate sind das Suspensionsverfahren und die Gasphasenverfahren (gerührte Gasphase, Gasphasenwirbelschicht).

Geeignete Reaktoren sind u.a. kontinuierlich betriebene Rührkessel, Schleifenreaktoren oder Wirbelbettreaktoren, wobei man gegebenenfalls auch eine Reihe von mehreren hintereinander geschalteten Reaktoren verwenden kann (Reaktorkaskade).

Die Polymerisation mit Hilfe des erfindungsgemäßen Verfahrens wird im allgemeinen bei Temperaturen im Bereich von -50 bis 300°C, vorzugsweise im Bereich von 0 bis 150°C, und bei Drücken in der Regel im Bereich von 0,5 bis 3000 bar, vorzugsweise im Bereich von 1 bis 80 bar, durchgeführt. Bei den erfindungsgemäßen Polymerisationsverfahren ist es vorteilhaft, die Verweilzeiten der jeweiligen Reaktionsgemische auf 0,5 bis 5 Stunden, insbesondere auf 0,7 bis 3,5 Stunden, einzustellen. Es können bei der Polymerisation u.a. auch Antistatika sowie Molmassenregler, beispielsweise Wasserstoff, mitverwendet werden.

Außer zur Polymerisation läßt sich das erfindungsgemäße Katalysatorsystem auch zur stöchiometrischen oder katalytischen, nicht-repetetiven Kohlenstoff-Kohlenstoff-Verknüpfung verwenden, weiterhin zur Reduktion von Carbonylgruppen >C=O, oder Iminogruppen >C=NH mit Kohlenstoffresten, Hydriden oder Amiden sowie in der Diels-Alder-Reaktion und der Hydrierung von ungesättigten Kohlenstoff- Kohlenstoff-, Kohlenstoff-Heteroatom, und Heteroatom-Heteroatom-Bindungen mit Wasserstoff und/oder Hydriden verwenden.

In der Regel spielen sich diese Reaktionen im niedermolekularen Bereich ab und führen in der Regel zu Produkten mit einem Molekulargewicht von weniger als ca 1000.

### Beispiele

### Beispiel 1 (Referenzbeispiel)

### Herstellung von amorphem AlF₃-(0,4-06 Toluol)

In einem 1 1-Dreihalskolben wurde eine Lösung von 14,9 g (105 mmol BF₃·OEt₂) in 150 ml Toluol vorgelegt und über einen Tropftrichter mit Druckausgleich unter Rühren 11,4 g (100 mmol) AlEt₃ in 150 ml Toluol langsam zugegeben. Die zwischenzeitliche Koagulation wurde durch kräftiges Schütteln aufgehoben. Der ausfallende Niederschlag wurde durch Abdekandieren isoliert und im Vakuum bei 80°C getrocknet. Man erhielt 12 g einer weißen, feinpulverigen Substanz.

### Beispiel 2

### Herstellung der Katalysatoren

### 2.1 Herstellung aus Metallocendialkylen

In einem 100 ml-Dreihalskolben wurde eine Lösung von 1 g (3,6 mmol) Cp₂ZrMe₂ in 20 ml Toluol gelöst und dazu 950 mg (4 mmol) Hexafluorantimonsäure gegeben. Die Lösung färbte sich rot. Dazu wurde etwa 15 g des unter 1. erhaltenen AlF₃ gegeben und das Toluol im Vakuum entfernt. Man erhielt etwa 16 g eines gut rieselfähigen Pulvers (Katalysator 1).

### 2.2 Herstellung aus Metallocendichlorid

In einem 100 ml-Dreihalskolben wurde eine Lösung von 1 g (3,1 mmol) Cp₂ZrCl₂ in 20 ml Toluol gelöst und dazu 750 mg (3,5 mmol) Antimonpentafluorid (Aldrich) gegeben. Die Lösung färbe sich rot. Dazu wurde etwa 15 g des unter 1. erhaltenen AlF₃ gegeben und das Toluol im Vakuum entfernt. Man erhielt etwa 15,5 g eines gut rieselfähigen Pulvers. (Katalysator 2)

### 2.3 Herstellung eines Katalysators aus Dimethylsilylenbis(2-methyl-4,5-benzoindenyl)-Zirkonocendichlorid

In einem 500 ml-Dreihalskolben wurde eine Lösung von 0,5 g (0,9 mmol) Dimethylsilylenbis(2-methyl-4,5-benzoindenyl)-Zirkonocendichlorid in 300 ml Toluol gelöst und dazu 215 mg (1 mmol) Antimonpentafluorid (Aldrich) gegeben. Die Lösung färbte sich rot. Dazu wurde etwa 5 g des unter Beispiel 1. erhaltenen AlF₃ gegeben und das Toluol im Vakuum entfernt. Man erhielt etwa 5,5 g eines gut rieselfähigen Pulvers. (Katalysator 3)

### Beispiel 3

### Polymerisation mit den erhaltenen Katalysatoren

### 3.1 Homopolymerisation von Ethylen

In einem gerührten 10-1-Stahlautoklaven wurden nach sorgfältigem Spülen mit Stickstoff und Temperieren auf die Polymerisationstemperatur von 70 °C 4.5 l iso-Butan und 80 mg Butyllithium (Lösung in Heptan) vorgelegt. Dann wurden 200 mg des Katalysators 1 oder 2 mit weiteren 0.5 l iso-Butan eingespült und Ethylen auf einen Gesamtdruck von 38 bar aufgepreßt. Der Druck im Autoklaven wurde durch Nachdosierung von Ethylen konstant gehalten. Nach 90 min wurde die Polymerisation durch Entspannen des Autoklaven abgebrochen. Das Polymerisat fiel in Form eines gut rieselfähigen Grießes an. Ausbeute: 1.4 kg (Katalysator 1), 1.5 kg (Katalysator 2).

### 3.2 Copolymerisation von Ethylen und 1-Hexen

In einem gerührten 10 l-Stahlautoklaven wurden nach sorgfältigem Spülen mit Stickstoff und Temperieren auf die Polymerisationstemperatur von 70 °C 4.5 l iso-Butan, 400 ml 1- Hexen und 150 mg Butyllithium (Lösung in Heptan) vorgelegt. Dann wurden 200 mg des Katalysators 1 oder 2 mit weiteren 0.5 l iso-Butan eingespült und Ethylen auf einen Gesamtdruck von 38 bar aufgepreßt. Der Druck im Autoklaven wurde durch Nachdosierung von Ethylen konstant gehalten. Nach 90 min wurde die Polymerisation durch Entspannen des Autoklaven abgebrochen. Das Polymerisat fiel in Form eines gut rieselfähigen Grießes an. Ausbeute: 1.8 kg (Katalysator 1), 1.7 kg (Katalysator 2).

### 3.3 Propylen-Homopolymerisation

Im Stickstoffgegenstrom wurden 100 g Polymervorlage in den Autoklav gefüllt. Bei langsamer Rührgeschwindigkeit ( 100 U/min) wurde der Autoklav dreimal mit je 5 bar Stickstoff gespült. Danach wurden 20 mmol Aluminiumalkyl (9 ml 2-molare TiBAl- und 1 ml 2-molare DiBAH-Lösungen in Heptan) im Stickstoffgegenstrom über den Einfüllstutzen zugegeben und erneut gespült. Der Katalysator (200 mg Katalysator 3) wurde als Feststoff im Stickstoffgegenstrom über den Einfüllstutzen mit einem Einleitungsrohr eingefüllt. Dann wurden 7 flüssiges Propylen in den Autoklaven gefüllt Der Autoklav wurde auf 70-75°C aufgeheizt, die Rührerdrehzahl erhöht. Nach Erreichen der Solltemperatur (65°C) wurde 90 Minuten polymerisiert. Anschließend wurde nach Entspannen des Autoklaven das Produkt über ein Bodenablaßventil ausgetragen. Man erhielt 750 g Polypropylen, nach Abzug der Menge für die Vorlage also 650 g, was einer Produktivität von 3,25 kg Polypropylen/g Katalysator entspricht.

### Beispiel 4

### Herstellung des Katalysators

350 mg (0,1 mmol) Bis-indenyl-zirkonium-dimethyl werden in 30 ml abs. Toluol gelöst. Dazu werden 150 mg (0,1 mmol) Trifluormethansulfonsäure (2 molar in Toluol) zugegeben. Zu dem Reaktionsgemisch werden 1,7 g (20 mmol) amorphes AlF₃ gegeben. Das Reaktionsgemisch wird für 30 min bei Zimmertemperatur gerührt.

### Ethylenpolymerisation:

In einem 1-1-Autoklaven werden 80 mg Aluminiumtriethyl (als Lösung in Heptan) und 400 ml Isobutan vorgelegt. Nach Aufpressen von Ethylen bis auf einen Druck von 40 bar und Temperieren auf 70°C werden 3 ml der obigen Suspension über eine Schleuse zugegeben. Nach 65 min wurde die Polymerisation durch Entspannen abgebrochen. Man erhielt 45 g Polyethylen, η-Wert: 14,7 dl/g.

### Beispiel 5

### Herstellung des Katalysators

350 mg (1 mmol) Bis-indenyl-zirkonium-dimethyl werden in 30 ml abs. Toluol gelöst. Dazu werden 150 mg (1 mmol) Trifluormethansulfonsäure (2 molar in Toluol zugegeben, anschließend wird für 30 min bei 80°C gelöst. Dazu werden 1,7 g (20 mmol) amorphes AlF₃ gegeben. Das Reaktionsgemisch wird für 1 h auf 90°C erhitzt. Anschließend werden 10 g Kieselgel (Fa. Grace, SG 332, bei 130°C ausgeheizt und mit TiBAL behandelt) dazugefügt. Das Lösungsmittel wird abfiltriert und der Rückstand mit Heptan gewaschen. Nach dem Trocknen im Vakuum erhält man 11,9 g eines gut rieselnden Feststoffs.

### Ethylenpolymerisation:

In einem 1-l-Autoklaven werden 120 mg Aluminiumtriethyl (als Lösung in Heptan) und 400 ml Isobutan vorgelegt. Nach Aufpressen von Ethylen bis auf einen Druck von 40 bar und Temperieren auf 70°C werden 335 mg des geträgerten Katalysators über eine Schleuse zugegeben. Nach 90 min wurde die Polymerisation durch Entspannen abgebrochen. Man erhielt 90 g Polyethylen, η-Wert: 49,5 dl/g.

### Beispiel 6

### Herstellung des Katalysators

540 mg (0,1 mmol) Di(2,6-di-iPr-phenyl)2,3-dimethyl-diazabutadien]palladiumdimethyl wurden in 30 ml abs. Toluol gelöst. Dazu wurden 150 mg (0,1 mmol) Trifluormethansulfonsäure (2 molar in Toluol) zugegeben. Zu dem Reaktionsgemisch wurden 1,7 g (20 mmol) amorphes AlF₃ gegeben. Das Reaktionsgemisch wurde für 30 min bei Zimmertemperatur gerührt.

### Ethylenpolymerisation:

In einem 1-l-Autoklaven wurden 80 mg Aluminiumtriethyl (als Lösung in Heptan) und 400 ml Isobutan vorgelegt. Nach Aufpressen von Ethylen bis auf einen Druck von 40 bar und Temperieren auf 70°C wurden 3 ml der obigen Suspension über eine Schleuse zugegeben. Nach 65 min wurde die Polymerisation durch Entspannen abgebrochen. Man erhielt 31 g zähflüssiges Polyethylen mit M_{w} = 40.000 und M_{w}/Mₙ = 2.

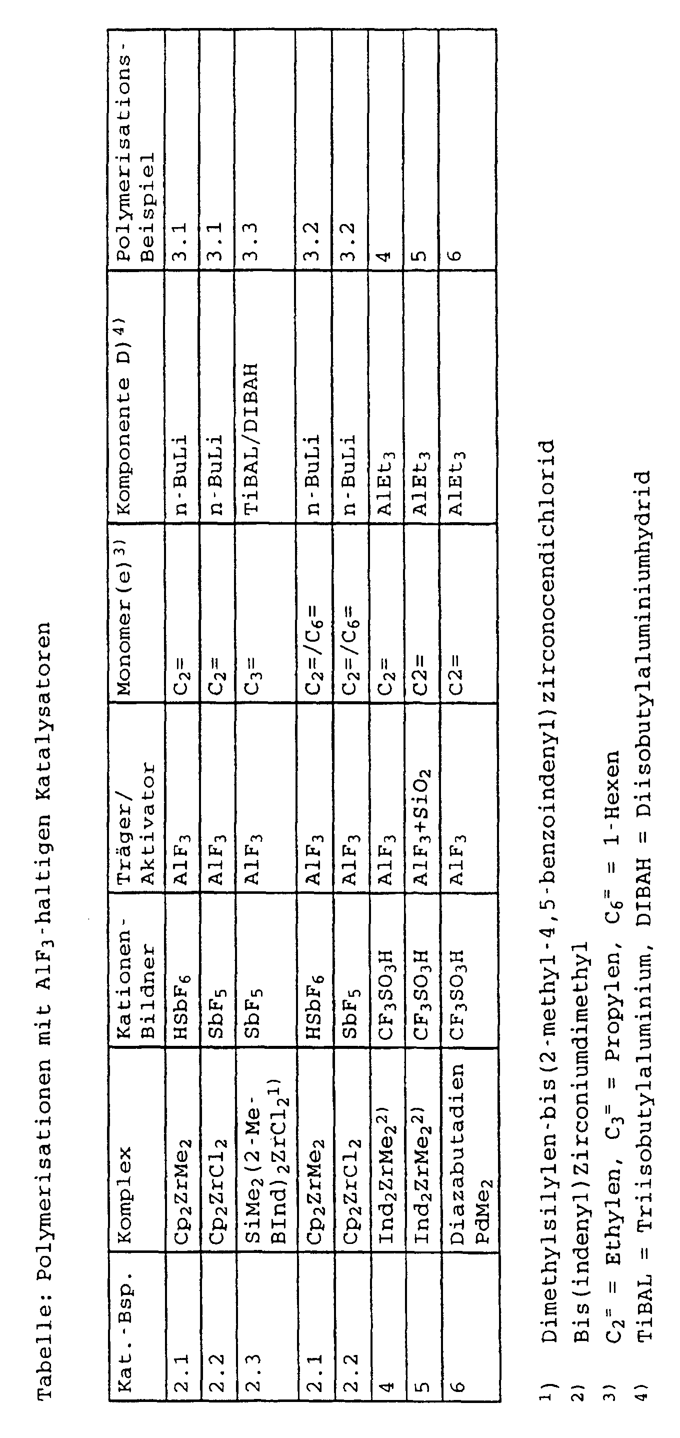

## Patentansprüche

1. Katalysatorsystem, welches für die Polymerisation von ungesättigten Monomeren geeignet ist, enthaltend als aktive Bestandteile solche, die erhältlich sind durch die Umsetzung von
A) einer Übergangsmetallverbindung
mit
B) Aluminiumtrifluorid und
C) einer kationenbildenden Verbindung, die von B) verschiedenen ist,
ausgewählt aus der Gruppe bestehend aus
moderaten neutralen und positiv geladenen Lewis-Säuren der allgemeinen Formel
MetR'_{n'}
wobei
Met ein Element der Gruppen 13 bis 15 des Periodensystems der Elemente,
R' anorganische oder organische Reste, die gleich oder verschieden sein können, und
n eine ganze Zahl von 3 bis 5 ist, wobei n für die Wertigkeit von Met steht, oder
[MetR'ₙ₊₁]^{⊕} [An]^{⊖} oder [MetR'ₙ₋₁]^{⊕} [An]^{⊖},
wobei
Met ein Element der Gruppen 13 bis 16 des Periodensystems der Elemente,
R' anorganische oder organische Reste, die gleich oder verschieden sein können,
n eine ganze Zahl von 2 bis 5, wobei n für die Wertigkeit von Met steht, und
[An]^{⊖} ein Anion ist,
Brönsted-Säuren mit wenig nucleophilem Anion der allgemeinen Formel
[MetR'ₙ₊₁]^{⊖},
wobei
Met für ein Element der Gruppen 13 bis 15 des Periodensystems der Elemente,
R' für anorganische oder organische Reste, die gleich oder verschieden sein können, und
n eine ganze Zahl von 3 bis 5 steht, wobei n für die Wertigkeit von Met steht,
wenig nucleophilen Anionen der allgemeinen Formel
R'SO₃^{⊖},
wobei
R' für einen anorganischen oder organischen Rest steht,
starken neutralen Lewissäuren der allgemeinen Formel II
M³X¹X²X³ II
in der
M³ ein Element der III. Hauptgruppe des Periodensystems bedeutet, und
X¹, X² und X³ für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen,
und
ionischen Verbindungen mit starken lewissauren Kationen der allgemeinen Formel III
[(Y^{a+})Q₁Q₂...Q_{z}]^{d+} III
in denen
Y ein Element der I. bis VI. Hauptgruppe oder der I. bis VIII. Nebengruppe des Periodensystems bedeutet,
Q₁ bis Q_{z} für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
a für ganze Zahlen von 1 bis 6 und
z für ganze Zahlen von 0 bis 5 steht,
d der Differenz a-z entspricht, wobei d jedoch größer oder gleich 1 ist,
und gegebenenfalls
D) weiteren Komponenten.

2. Katalysatorsystem nach Anspruch 1, wobei das Aluminiumtrifluorid amorph ist.

3. Katalysatorsystem nach den Ansprüchen 1 bis 2, wobei als Übergangsmetallverbindungen solche der allgemeinen Formel I 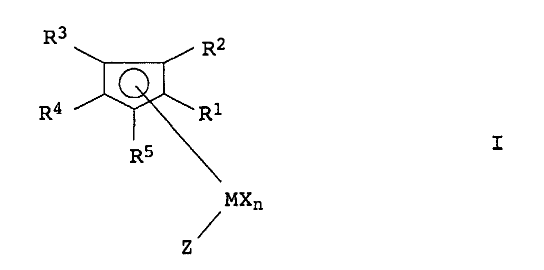 in der die Substituenten folgende Bedeutung haben:
M Titan, Zirkonium, Hafnium, Vanadium, Niob oder Tantal, sowie Elemente der III. Nebengruppe des Periodensystems und der Lanthanoiden,
X Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷,
n eine ganze Zahl zwischen 1 und 3, wobei n der Wertigkeit von M minus der Zahl 2 entspricht,
wobei
R⁶ und R⁷ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
R¹ bis R⁵ Wasserstoff, C₁- bis C₁₀-Alkyl,
5- bis 7gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁸)₃ mit
R⁸ C₁- bis C₁₀-Alkyl, C₃- bis C₁₀-Cycloalkyl oder C₆- bis C₁₅-Aryl,
Z für X oder 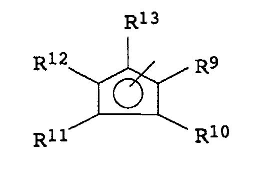 steht,
wobei die Reste
R⁹ bis R¹³ Wasserstoff, C₁- bis C₁₀-Alkyl,
5- bis 7gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁴)₃ mit
R¹⁴ C₁- bis C₁₀-Alkyl, C₆- bis C₁₅-Aryl oder C₃- bis C₁₀-Cycloalkyl,
oder wobei die Reste R⁴ und Z gemeinsam eine Gruppierung - R¹⁵-A- bilden, in der
R¹⁵ 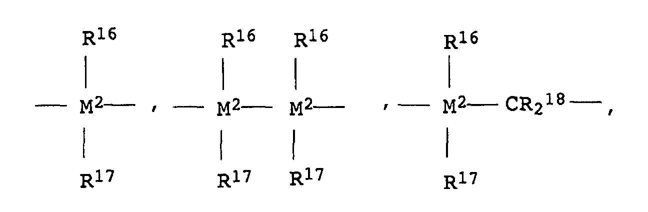 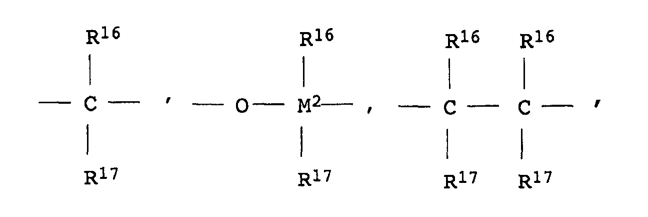
= BR¹⁶, = AlR¹⁶, -Ge-, -Sn-, -O-, -S-, = SO, = SO₂, = NR¹⁶, = CO, = PR¹⁶ oder = P(O)R¹⁶ ist,
wobei
R¹⁶, R¹⁷ und R¹⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
M² Silicium, Germanium oder Zinn ist,
A -O-, -S-, 〉NR¹⁹ oder 〉PR¹⁹ bedeuten, mit
R¹⁹ C₁- bis C₁₀-Alkyl, C₆- bis C₁₅-Aryl, C₃- bis C₁₀-Cycloalkyl, Alkylaryl oder Si(R²⁰)₃,
R²⁰ Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁴ und R¹² gemeinsam eine Gruppierung -R¹⁵- bilden.
verwendet werden.

4. Katalysatorsystem nach den Ansprüchen 1 bis 3, wobei die Komponente D) eine Organometallverbindung ist.

5. Verwendung von Aluminiumtrifluorid als Aktivator in einem Katalysatorsystem nach den Ansprüchen 1 bis 4.

6. Verfahren zur Herstellung eines Katalysatorsystems, welches für die Polymerisation von ungesättigten Monomeren geeignet ist, durch die Umsetzung von
A) einer Übergangsmetallverbindung
mit
B) Aluminiumtrifluorid,
C) einer kationenbildenden Verbindung, die von B) verschiedenen ist,
ausgewählt aus der Gruppe bestehend aus
moderaten neutralen und positiv geladenen Lewis-Säuren der allgemeinen Formel
MetR'ₙ,
wobei
Met ein Element der Gruppen 13 bis 15 des Periodensystems der Elemente,
R' anorganische oder organische Reste, die gleich oder verschieden sein können, und
n eine ganze Zahl von 3 bis 5 ist, wobei n für die Wertigkeit von Met steht, oder
[MetR'ₙ₊₁]^{⊕} [An]^{⊖} oder [MetR'ₙ₋₁]^{⊕} [An]^{⊖},
wobei
Met ein Element der Gruppen 13 bis 16 des Periodensystems der Elemente,
R' anorganische oder organische Reste, die gleich oder verschieden sein können,
n eine ganze Zahl von 2 bis 5, wobei n für die Wertigkeit von Met steht, und
[An]^{⊖} ein Anion ist,
Brönsted-Säuren mit wenig nucleophilem Anion der allgemeinen Formel
[MetR'ₙ₊₁]^{⊖},
wobei
Met für ein Element der Gruppen 13 bis 15 des Periodensystems der Elemente,
R' für anorganische oder organische Reste, die gleich oder verschieden sein können, und
n eine ganze Zahl von 3 bis 5 steht, wobei n für die Wertigkeit von Met steht,
wenig nucleophilen Anionen der allgemeinen Formel
R'SO₃^{⊖},
wobei
R' für einen anorganischen oder organischen Rest steht,
starken neutralen Lewissäuren der allgemeinen Formel II
M³X¹X²X³ II
in der
M³ ein Element der III. Hauptgruppe des Periodensystems bedeutet, und
X¹, X² und X³ für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen,
und
ionischen Verbindungen mit starken lewissauren Kationen der allgemeinen Formel III
[(Y^{a+})Q₁Q₂...Q_{z}]^{d+} III
in denen
Y ein Element der I. bis VI. Hauptgruppe oder der I. bis VIII. Nebengruppe des Periodensystems bedeutet,
Q₁ bis Q_{z} für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
a für ganze Zahlen von 1 bis 6 und
z für ganze Zahlen von 0 bis 5 steht,
d der Differenz a-z entspricht, wobei d jedoch größer oder gleich 1 ist,
und gegebenenfalls
D) weiteren Komponenten.

7. Verfahren zur Herstellung von Polymeren, welchen Monomere mit C-C-Doppelbindung und/oder C-C-Dreifachbindung zugrunde liegen, durch Polymerisation dieser Monomeren in Gegenwart eines Katalysatorsystems nach den Ansprüchen 1 bis 4.

8. Verfahren zur Herstellung von Polymeren nach Anspruch 7, wobei die Monomere mit C-C-Doppelbindung aus der Gruppe bestehend aus C₂-bis C₂₀-Alk-1-enen und C₈- bis C₂₀-vinylaromatischen Verbindungen ausgewählt werden.

9. Verwendung eines Katalysatorsystems nach den Ansprüchen 1 bis 4 zur Knüpfung von Kohlenstoff-Kohlenstoff-Kovalenzbindungen oder Kohlenstoff-Heteroatom-Kovalenzbindungen.

10. Verwendung eines Katalysatorsystems nach Anspruch 9, zur Herstellung niedermolekularer bis hochmolekularer Kohlenstoffatom-haltiger Moleküle.

## Claims

1. A catalyst system suitable for polymerizing unsaturated monomers and comprising active constituents obtainable by reacting
A) a transition metal compound
with
B) aluminum trifluoride,
C) a cation-forming compound other than B),
selected from the group consisting of
moderate neutral and positively charged Lewis acids of the formula
MetR'ₙ,
where
Met is an element from groups 13 to 15 of the Periodic Table of the Elements,
R' is inorganic or organic radicals which can be the same or different,
n is an integer from 3 to 5 and represents the valence of Met, or
[MetR'ₙ₊₁]^{⊕} [An]^{⊖} or [MetR'ₙ₋₁]^{⊕} [An]^{⊖}
where
Met is an element from groups 13 to 16 of the Periodic Table of the Elements,
R' is inorganic or organic radicals which can be the same or different,
n is an integer from 2 to 5 and represents the valence of Met, and
[An]^{⊖} is an anion,
Brönsted acids with an anion of low nucleophilicity, of the formula
[MetR'ₙ₊₁]^{⊖},
where
Met is an element from groups 13 to 15 of the Periodic Table of the Elements,
R' is inorganic or organic radicals which can be the same or different, and
n is an integer from 3 to 5 and represents the valence of Met,
anions of low nucleophilicity, of the formula
R'SO₃^{⊖},
where
R' is an inorganic or organic radical,
strong neutral Lewis acids of the formula II
M³X¹X²X³ II
where
M³ is an element from main group III of the Periodic Table, and
X¹, X² and X³ are hydrogen, C₁- to C₁₀-alkyl, C₆- to C₁₅-aryl, alkylaryl, arylalkyl, haloalkyl or haloaryl having in each case 1 to 10 carbon atoms in the alkyl radical and 6 to 20 carbon atoms in the aryl radical, or are fluorine, chlorine, bromine or iodine,
and
ionic compounds having strong Lewis-acid cations, of the formula III
[(Y^{a+})Q₁Q₂...Q_{z}]^{d+} III
where
Y is an element of main groups I to VI or of subgroups I to VIII of the Periodic Table,
Q₁ to Q_{z} are radicals bearing a single negative charge, such as C₁- to C₂₈-alkyl, C₆- to C₁₅-aryl, alkylaryl, arylalkyl, haloalkyl, haloaryl each having 6 to 20 carbon atoms in the aryl and 1 to 28 carbon atoms in the alkyl radical, C₃- to C₁₀-cycloalkyl, which can be unsubstituted or substituted by C₁- to C₁₀-alkyl groups, or are halogen, C₁- to C₂₈-alkoxy, C₆- to C₁₅-aryloxy, silyl or mercaptyl groups
a is an integer from 1 to 6 and
z is an integer from 0 to 5,
d being the difference a-z but being greater than or equal to 1,
and, if desired,
D) further components.

2. A catalyst system as claimed in claim 1, where the aluminum trifluoride is amorphous.

3. A catalyst system as claimed in either of claims 1 and 2, where the transition metal compound used is of the formula I 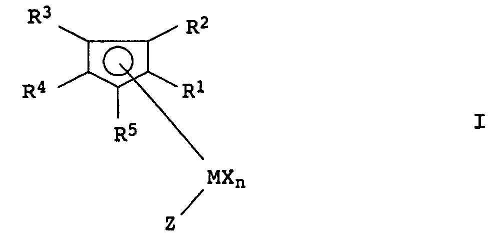 where
M is titanium, zirconium, hafnium, vanadium, niobium or tantalum or an element from subgroup III of the Periodic Table or from the lanthanoids,
X is fluorine, chlorine, bromine, iodine, hydrogen, C₁-C₁₀-alkyl, C₆-C₁₅-aryl, alkylaryl having 1 to 10 carbons in the alkyl radical and 6 to 20 carbons in the aryl radical, -OR⁶ or -NR⁶R⁷,
n is an integer between 1 and 3, n corresponding to the valence of M minus 2,
and where
R⁶ and R⁷ are C₁-C₁₀-alkyl, C₆-C₁₅-aryl, alkylaryl, arylalkyl, fluoroalkyl or fluoroaryl having in each case 1 to 10 carbons in the alkyl radical and 6 to 20 carbons in the aryl radical,
R¹ to R⁵ are hydrogen, C₁-C₁₀-alkyl, 5-7 membered cycloalkyl which can in turn carry a C₁-C₁₀-alkyl as substituent, C₆-C₁₅-aryl or arylalkyl, where two adjacent radicals may if desired together be saturated or unsaturated cyclic groups having 4 to 15 carbons, or are Si(R⁸)₃ where
R⁸ is C₁-C₁₀-alkyl, C₃-C₁₀-cycloalkyl or C₆-C₁₅-aryl,
Z is X or 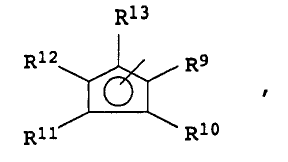
and where the radicals
R⁹ to R¹³ are hydrogen, C₁-C₁₀-alkyl, 5-7-membered cycloalkyl which can in turn carry a C₁-C₁₀-alkyl substituent, C₆-C₁₅-aryl or arylalkyl and where two adjacent radicals may if desired together be saturated or unsaturated cyclic groups having 4 to 15 carbons, or are Si(R¹⁴)₃ where
R¹⁴ is C₁-C₁₀-alkyl, C₆-C₁₅-aryl or C₃-C₁₀-cycloalkyl,
or where the radicals R⁴ and Z together form a group -R¹⁵-A-in which
R¹⁵ is 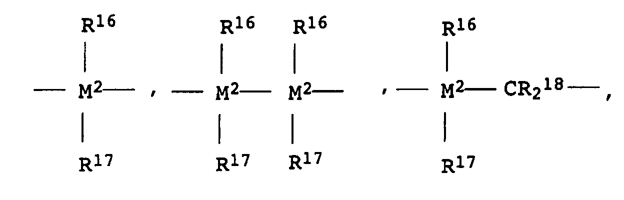 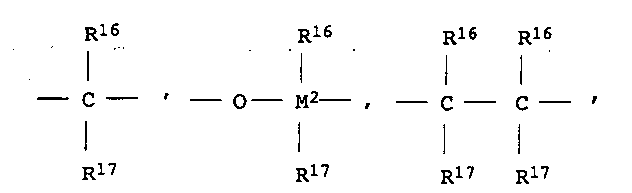
= BR¹⁶, = AlR¹⁶, -Ge-, -Sn-, -O-, -S-, = SO, = SO₂, = NR¹⁶, = CO, = PR¹⁶ or = P(O)R¹⁶,
where
R¹⁶, R¹⁷ and R¹⁸ are the same or different and are hydrogen, halogen, C₁-C₁₀-alkyl, C₁-C₁₀-fluoroalkyl, C₆-C₁₀-fluoroaryl, C₆-C₁₀-aryl, C₁-C₁₀-alkoxy, C₂-C₁₀-alkenyl, C₇-C₄₀-arylalkyl, C₈-C₄₀-arylalkenyl or C₇-C₄₀-alkylaryl, or where two adjacent radicals in each case form a ring with the atoms linking them, and
M² is silicon, germanium or tin,
A is -O-, -S-, 〉NR¹⁹ or 〉PR¹⁹ where
R¹⁹ is C₁-C₁₀-alkyl, C₆-C₁₅-aryl, C₃-C₁₀-cycloalkyl, alkylaryl or Si(R²⁰)₃,
R²⁰ is hydrogen, C₁-C₁₀-alkyl, C₆-C₁₅-aryl which may in turn be substituted by C₁-C₄-alkyls, or is C₃-C₁₀-cycloalkyl
or where the radicals R⁴ and R¹² together form a group -R¹⁵-.

4. A catalyst system as claimed in any of claims 1 to 3, where component D) is an organometallic compound.

5. The use of aluminum trifluoride as activator in a catalyst system as claimed in any of claims 1 to 4.

6. A process for preparing a catalyst system suitable for polymerizing unsaturated monomers, by reacting
A) a transition metal compound
with
B) aluminum trifluoride,
C) a cation-forming compound other than B),
selected from the group consisting of
moderate neutral and positively charged Lewis acids of the formula
MetR'ₙ,
where
Met is an element from groups 13 to 15 of the Periodic Table of the Elements,
R' is inorganic or organic radicals which can be the same or different, and
n is an integer from 3 to 5 and represents the valence of Met, or
[MetR'ₙ₊₁]^{⊕} [An]^{⊖} or [MetR'ₙ₋₁]^{⊕} [An]^{⊖}
where
Met is an element from groups 13 to 16 of the Periodic Table of the Elements,
R' is inorganic or organic radicals which can be the same or different,
n is an integer from 2 to 5 and represents the valence of Met, and
[An]^{⊖} is an anion,
Brönsted acids with an anion of low nucleophilicity, of the formula
[MetR'ₙ₊₁]^{⊖},
where
Met is an element from groups 13 to 15 of the Periodic Table of the Elements,
R' is inorganic or organic radicals which can be the same or different, and
n is an integer from 3 to 5 and represents the valence of Met,
anions of low nucleophilicity, of the formula
R'SO₃^{⊖},
where
R' is an inorganic or organic radical,
strong neutral Lewis acids of the formula II
M³X¹X²X³ II
where
M³ is an element from main group III of the Periodic Table, and
X¹, X² and X³ are hydrogen, C₁- to C₁₀-alkyl, C₆- to C₁₅-aryl, alkylaryl, arylalkyl, haloalkyl or haloaryl having in each case 1 to 10 carbon atoms in the alkyl radical and 6 to 20 carbon atoms in the aryl radical, or are fluorine, chlorine, bromine or iodine,
and
ionic compounds having strong Lewis-acid cations, of the formula III
[(Y^{a+})Q₁Q₂...Q_{z}]^{d+} III
where
Y is an element of main groups I to VI or of subgroups I to VIII of the Periodic Table,
Q₁ to Q_{z} are radicals bearing a single negative charge, such as C₁- to C₂₈-alkyl, C₆- to C₁₅-aryl, alkylaryl, arylalkyl, haloalkyl, haloaryl each having 6 to 20 carbon atoms in the aryl and 1 to 28 carbon atoms in the alkyl radical, C₃- to C₁₀-cycloalkyl, which can be unsubstituted or substituted by C₁- to C₁₀-alkyl groups, or are halogen, C₁- to C₂₈-alkoxy, C₆- to C₁₅-aryloxy, silyl or mercaptyl groups
a is an integer from 1 to 6 and
z is an integer from 0 to 5,
d being the difference a-z but being greater than or equal to 1,
and, if desired,
D) further components.

7. A process for preparing polymers based on monomers with C-C double bond and/or C-C triple bond, by polymerizing these monomers in the presence of a catalyst system as claimed in any of claims 1 to 4.

8. A process for preparing polymers as claimed in claim 7, where the monomers with C-C double bond are selected from the group consisting of C₂-C₂₀-alk-1-enes and C₈-C₂₀ vinylaromatic compounds.

9. The use of a catalyst system as claimed in any of claims 1 to 4 for forming carbon-carbon covalent bonds or carbon-heteroatom covalent bonds.

10. The use of a catalyst system as claimed in claim 9 for preparing carbon-comprising molecules of low to high molecular mass.

## Revendications

1. Un système de catalyseur, qui convient pour la polymérisation de monomères non-saturés lequel système contient, comme composants actifs ceux qui peuvent être obtenus par la conversion de
A) un composé métallique de transition
avec
B) du trifluorure d'aluminium et
C) un composé formant des cations, qui est différent de B) sélectionné à partir du groupe se composant
des acides Lewis chargés positivement ou modérément neutres de formule générale
MetR'_{n'}
dans laquelle
Met est un élément des groupes 13 à 15 du système périodique des éléments,
R' est un reste inorganique ou organique qui peut être similaire ou différent et
n est un nombre entier de 3 à 5, dans lequel n représente la valence de Met, ou [MetR'ₙ₊₁]^{⊕} [An]^{⊖} ou
[MetR'ₙ₋₁]^{⊕} [An] ^{⊖},
où
Met est un élément des groupes 13 à 16 du système des éléments périodiques
R' est un reste organique ou inorganique, qui peut être différent ou similaire,
n est un nombre entier de 2 à 5, dans lequel n représente la valence de Met, et
[An]^{⊖} est un anion,
des acides Brönsted comprenant un anion peu nucléophile de formule générale [MetR'ₙ₊₁]^{⊖},
dans laquelle
Met est un élément des groupes 13 à 15 du système des éléments périodiques
R' représente des restes organiques ou inorganiques qui peuvent être similaires ou différents, et
n est un nombre entier de 3 à 5, dans lequel n représente la valence de Met,
quelques anions nucléophiles de formule générale R'SO₃^{⊖}, dans laquelle
R' représente un reste organique ou inorganique,
des acides de Lewis neutres forts de formule générale II
M³X¹X²X³ (II)
dans laquelle
M³ désigne un élément du III. groupe principal du système d'éléments périodiques, et
X¹, X² et X³
représentent de l'hydrogène, de l'alkyle en C₁-C₁₀, de l'aryle en C₆-C₁₅, de l'alkylaryle, de l'arylalkyle, de l'halogènalkyle et de l'halogènaryle comprenant à chaque fois 1 à 10 atomes de carbone dans le reste alkyle et 6 à 20 atomes de carbone dans le reste aryle ou du fluor, du chlore, du brome ou de l'iode,
et
un des composés ioniques avec des cations d'acides Lewis forts de formule générale III
[(Y^{a+})Q₁Q₂...Q_{z}]^{d+} III
dans laquelle
Y désigne un élément des groupes principaux de I. à VI. ou des groupes secondaires de I. à VIII. du système des éléments périodiques,
Q₁ à Q_{z} représentent des restes chargés simplement négativement tels que de l'alkyle en C₁-C₂₈, de l'aryle en C₆-C₁₅, de l'alkylaryle, de l'arylalkyle, de l'halogènalkyle, de l'halogènaryle, avec à chaque fois 6 à 20 atomes de carbone dans le reste aryle et 1 à 28 atomes de carbone dans le reste alkyle, du cycloalkyle en C₃-C₁₀, qui, le cas échéant, peut être substitué avec un groupe alkyle en C₁-C₁₀, de l'halogène, un alcoxy C₁-C₂₈, un aryloxy C₆-C₁₅, des groupes mercaptyles ou silyles
a représente un nombre entier de 1 à 6 et
z représente un nombre entier de 0 à 5,
d correspond à la différence a - z, dans laquelle d est cependant supérieur ou égal à 1 et
le cas échéant
D) d'autres composants.

2. Système de catalyseur selon la revendication 1, dans lequel le trifluorure d'aluminium est amorphe.

3. Système de catalyseur selon l'une quelconque des revendications de 1 à 2, dans lequel comme composés métalliques de transition, on utilise ceux de formule générale I 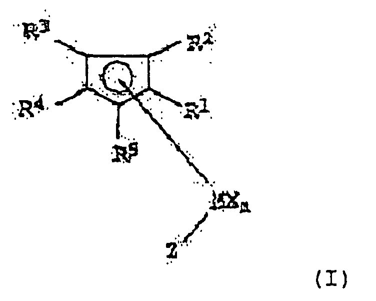 dans laquelle formule les substituants ont la désignation suivante :
M représente du titane, du zirconium, de l'hafnium, du vanadium, du niob ou du tantale, ainsi que les éléments du III groupe secondaire du système périodique et des lanthanoides,
X représente du fluor, du chlore, du brome, de l'iode, de 1-'hydrogène, des alkyles en C₁-C₁₀, des aryles en C₆-C₁₅, des alkylaryles comprenant 1 à 10 atomes de carbone dans le reste alkyle et 6 à 20 atomes de carbone dans le reste aryle, -OR⁶ ou -NR⁶R⁷,
n représente un nombre entier entre 1 et 3, où n correspond à la valence de M moins le nombre 2,
dans laquelle
R⁶ et R⁷ désigne de l'alkyle en C₁-C₁₀, de l'aryle en C₆-C₁₅, de l'alkylaryle, de l'arylalkyle ou du fluoroalkyle, ou du fluoroaryle comprenant à chaque fois 1 à 10 atomes de carbone dans le reste alkyle et 6 à 20 atomes de carbone dans le reste aryle,
R¹ à R⁵ représentent de l'hydrogène, un alkyle en C₁-C₁₀, un cycloalkyle de 5 à 7 membres, qui peut porter comme substituants un alkyle en C₁-C₁₀ d'un côté, un aryle en C₆-C₁₅ ou un arylalkyle, dans lequel le cas échéant les deux restes adjacents peuvent être communément des groupes cycliques non-saturés ou saturés présentant 4 à 15 atomes de carbone ou Si(R⁸)₃ comprenant
R⁸ représentant un alkyle en C₁-C₁₀, un cycloalkyle en C₃-C₁₀ ou un aryle en C₆-C₁₅, 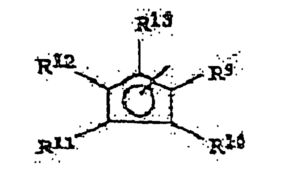 Z représente X ou
dans laquelle les restes
R⁹ à R¹³ représentent de l'hydrogène, de l'alkyle en C₁-C₁₀, du cycloalkyle à 5 ou 7 membres, qui peut porter d'un côté comme substituants un alkyle en C₁-C₁₀, un aryle en C₆-C₁₅, un arylalkyle ou dans lequel le cas échéant les deux restes adjacents peuvent être communément des groupes cycliques non-saturés ou saturés présentant 4 à 15 atomes de carbone ou Si(R⁸)₃ comprenant
R¹⁴ représente un alkyle en C₁-C₁₀, un aryle en C₅-C₁₅ ou un cycloalkyle en C₃-C₁₀,
ou dans laquelle les restes R⁴ et z forment un regroupement commun R¹⁵-A-, dans lequel
R¹⁵ désigne 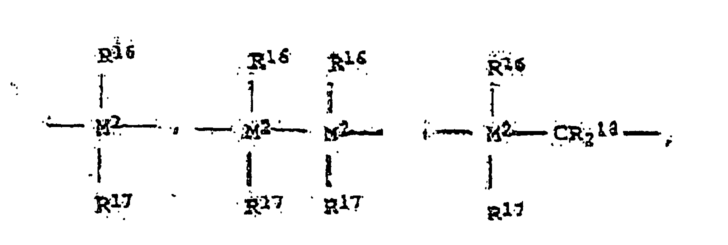 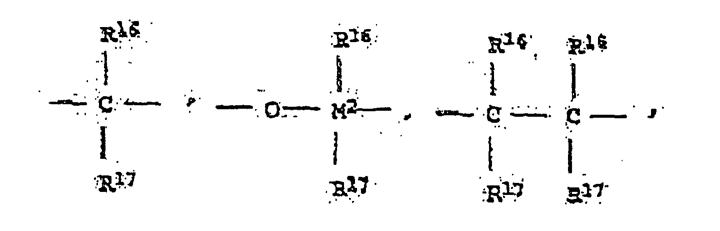 = BR¹⁶, = AlR¹⁶, -Ge-, -Sn-, -O-, -S-, = SO, = SO₂, = NR¹⁶, = CO, = PR¹⁶ ou = P(O)R¹⁶,
où
R¹⁶, R¹⁷ et R¹⁸ sont identiques ou similaires et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀, un groupe arylalkyle en C₇-C₄₀ et
dans lequel les restes adjacents forment à chaque fois avec les atomes s'y liant un cycle et
M² représente du silicium, du germanium ou de l'étain,
a désigne -O-, -S-, 〉NR¹⁰ ou < 〉PR¹⁹ comprenant
R¹⁹ désignant un alkyle en C₁-C₁₀, un aryle en C₆-C₁₅, un cycloalkyle en C₃-C₁₀, un alkylaryle ou Si(R²⁰)₃
R²⁰ représente de l'hydrogène, un alkyle en C₁-C₁₀, un aryle en C₆-C₁₅, qui peut être substitué d'un côté avec un groupe alkyle C₁-C₄ ou un cycloalkyle en C₃-C₁₀
où les restes R⁴ et R¹² forment un regroupement commun -R¹⁵-.

4. Système de catalyseur selon l'une quelconque des revendications 1 à 3 dans lequel le composant D) est un composé organo-métallique.

5. Utilisation de trifluorure d'aluminium comme activateur dans un système de catalyseur selon l'une quelconque des revendications 1 à 4.

6. Procédé de fabrication d'un système de catalyseur, qui convient pour la polymérisation de monomères non-saturés lequel système contient, comme composants actifs ceux qui peuvent être obtenus par la conversion de
A) un composé métallique de transition
avec
B) du trifluorure d'aluminium et
C) un composé formant des cations, qui est différent de B) sélectionné à partir du groupe se composant
des acides Lewis chargés positivement ou modérément neutres de formule générale MetR'_{n'}
dans laquelle
Met est un élément des groupes 13 à 15 du système périodique des éléments,
R' est un reste inorganique ou organique qui peut être similaire ou différent et
n est un nombre entier de 3 à 5, dans lequel n représente
la valence de Met, ou [MetR'ₙ₊₁]^{⊕} [An]^{⊖} ou [MetR'ₙ₋₁]^{⊕} [An]^{⊖},
où
Met est un élément des groupes 13 à 16 du système des éléments périodiques
R' est un reste organique ou inorganique, qui peut être différent ou similaire,
n est un nombre entier de 2 à 5, dans lequel n représente la valence de Met, et
[An]^{⊖} est un anion,
des acides Brönsted comprenant un anion peu nucléophile de formule générale [MetR'ₙ₊₁]^{⊖},
dans laquelle
Met est un élément des groupes 13 à 15 du système des éléments périodiques
R' représente des restes organiques ou inorganiques qui peuvent être similaires ou différents, et
n est un nombre entier de 3 à 5, dans lequel n représente la valence de Met,
quelques anions nucléophiles de formule générale R'SO₃^{⊖},
dans laquelle
R' représente un reste organique ou inorganique,
des acides de Lewis neutres forts de formule générale II
M³X¹X²X³ (II)
dans laquelle
M³ désigne un élément du III. groupe principal du système d'éléments périodiques, et
X¹, X² et X³
représentent de l'hydrogène, de l'alkyle en C₁-C₁₀, de l'aryle en C₆-C₁₅, de l'alkylaryle, de l'arylalkyle, de l'halogènalkyle et de l'halogènaryle comprenant à chaque fois 1 à 10 atomes de carbone dans le reste alkyle et 6 à 20 atomes de carbone dans le reste aryle ou du fluor, du chlore, du brome ou de l'iode,
et
un des composés ioniques avec des cations d'acides Lewis forts de formule générale III
[(Y^{a+})Q₁Q₂...Q_{z}]^{d+} III
dans laquelle
Y désigne un élément des groupes principaux de I. à VI. ou des groupes secondaires de I. à VIII. du système des éléments périodiques,
Q₁ à Q_{z} représentent des restes chargés simplement négativement tels que de l'alkyle en C₁-C₂₈, de l'aryle en C₆-C₁₅, de l'alkylaryle, de l'arylalkyle, de l'halogènalkyle, de l'halogènaryle, avec à chaque fois 6 à 20 atomes de carbone dans le reste aryle et 1 à 28 atomes de carbone dans le reste alkyle, du cycloalkyle en C₃-C₁₀, qui, le cas échéant, peut être substitué avec un groupe alkyle en C₁-C₁₀, de l' halogène, un alcoxy C₁-C₂₈, un aryloxy C₆-C₁₅, des groupes mercaptyles ou silyles
a représente un nombre entier de 1 à 6 et
z représente un nombre entier de 0 à 5,
d correspond à la différence a - z, dans laquelle d est cependant supérieur ou égal à 1 et
le cas échéant
D) d'autres composants.

7. Procédé pour la fabrication de polymères, dont les monomères se trouvent à la base avec des liaisons doubles C-C et / ou des liaisons triples C-C, par polymérisation de ce monomère en présence d'un système de catalyseur selon l'une quelconque des revendications 1 à 4.

8. Procédé pour la fabrication de monomères selon la revendication 7, dans lequel les monomères présentant des liaisons doubles C-C sont sélectionnés à partir du groupe se composant d'un alk-1-ènes en C₂-C₂₀ et de composés aromatiques vinyliques en C₈-C₂₀.

9. Utilisation d'un système de catalyseur selon l'une quelconque des revendications 1 à 4 pour la fixation d'une liaison de covalence carbone-carbone ou de liaison de covalence carbone-hétéroatome.

10. Utilisation d'un système de catalyseur selon la revendication 9 pour la fabrication d'une molécule contenant un atome de carbone présentant d'un faible poids moléculaire à un poids moléculaire élevé.
